# EUROPEAN PATENT APPLICATION

(11) **EP 1 835 587 A1**
(43) Date of publication of application: **19.09.2007**
(21) Application number: 07103735.2
(22) Date of filing: 08.03.2007
(51) Int. Cl.: H02B 1/46

(54) **Box for switchboard enclosure**

(30) Priority: 10.03.2006 IT TO20060188
(71) Applicant: SCHNEIDER ELECTRIC INDUSTRIES SAS, 92500 Rueil-Malmaison (FR)
(72) Inventor: Magno, Giorgio, 24030 Brembate Sopra (Bergamo) (IT)
(74) Representative: Fioravanti, Corrado

(57) **Abstract**

A box (10) for a switchboard enclosure comprises a rear wall (11) which has, extending perpendicularly therefrom, perimetral walls (12-15) each having a wall portion (12a-15a) which may be removed so as to allow electric cables to pass between two boxes (10) mounted adjacent to each other.

## Description

The present invention relates to a box for a switchboard enclosure.

Switchboard enclosures typically comprise a box which can be fixed to a vertical wall and is able to contain a plurality of electrical switches. The box comprises a rear wall which has, extending perpendicularly therefrom, perimetral walls which define at the front an opening which is usually closed by one or more front panels which have one or more front openings for access to the control levers or pushbuttons of the electrical switches.

When it is required to install one or more switches in a switchboard enclosure which is already in operation, but there is not sufficient space for the additional switches, the enclosure has to be replaced with a larger one. It is thus necessary to remove the switches from the old switchboard, disconnect their electrical connections and then restore the mechanical and electrical connections of the old and new switches inside the new enclosure. These operations require a considerable amount of time. In some cases the old enclosure, although being still functional, is no longer used, resulting in wastage of material.

One of the objects of the present invention is to provide a box for a switchboard enclosure which is able to overcome the above discussed drawbacks.

Another object of the present invention is to provide a box which is particularly suitable for use in certain countries where the existing regulations stipulate that the distribution unit which powers a series of switches must be enclosed within a housing which is separate from that of the switches and unable to be accessed by the user.

These and other objects and advantages, which will be understood more fully below, are achieved, in accordance with the present invention, by a box for a switchboard enclosure having the features defined in the accompanying claims.

The features and advantages of the invention will emerge from the detailed description of an example of embodiment thereof, with reference to the accompanying drawings, provided by way of a non-limiting illustration, in which:
- Figure 1 is a perspective view of three boxes of switchboard enclosures according to the present invention, associated with each other;
- Figure 2 is a perspective view, on a larger scale, of a detail of Figure 1 with a component for joining together two boxes according to the invention; and
- Figure 3 is a perspective view, similar to Figure 2, with the joining component mounted on two adjacent boxes.

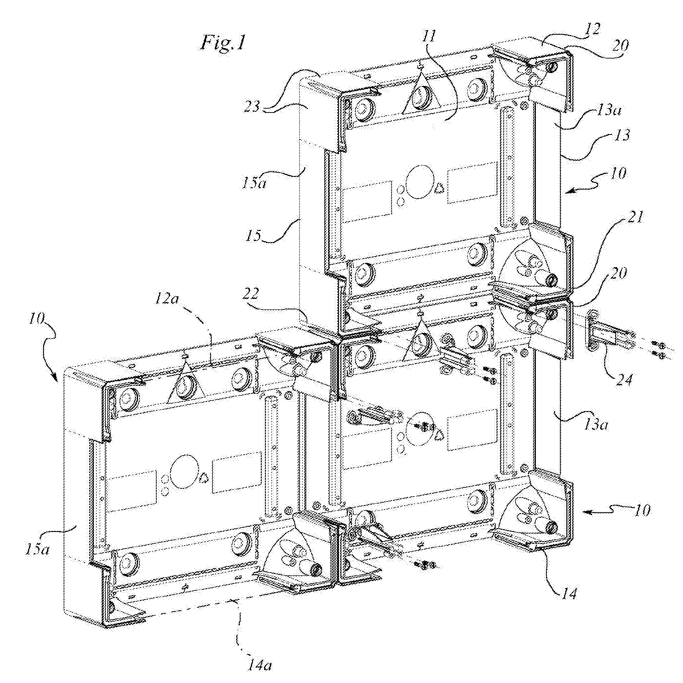

Figure 1 shows three boxes for switchboard enclosures which are associated with each other according to the present invention. Each box 10 comprises a rectangular rear wall 11 which has, extending perpendicularly therefrom, perimetral walls 12, 13, 14, 15 which define at the front an opening able to be closed by a conventional recessed front panel (not shown) which can be fixed removably to fastening elements 16 formed by the box 10. Through-holes 17 for fixing the box to a wall are formed in the rear wall 11.

In the present description and in the claims which follow, the terms "front" and "rear" must be understood from the view point of a person standing in front of an electric switchboard mounted on a vertical wall.

According to the present invention, the perimetral walls 12-15 each comprise a respective removable wall portion 12a-15a which may be removed so as to allow the insertion of cables for electrically connecting together two boxes 10 which are mounted adjacent to each other on a wall, as shown by way of example in Figure 1. In this way it is possible to combine a new switchboard enclosure with one of the same type already installed. The switches or other electrical devices contained inside the enclosure already installed previously do not need to be removed. It is obviously necessary to remove also from the enclosure already installed the removable wall portion adjacent to the new enclosure.

In the preferred embodiment shown in the drawings, all the perimetral walls have a removable portion, so that there is the possibility of mounting the additional enclosures equally well on the right-hand side, on the left-hand side, above or below a pre-existing enclosure.

In the example shown in the drawings, the removable wall portions 12a-15a can be extracted perpendicularly relative to the rear wall 11. For this purpose the fixed portions of the perimetral walls have guiding grooves 18 inside which opposite sides of the removable portions 12a-15a engage. In other words, each box 10 is provided integrally with four corner formations 20, 21, 22, 23 which extend perpendicularly from the four vertices of the rear wall 11, each corner formation having two horizontal grooves or guides 18 arranged on respective consecutive sides of the box.

The choice of designing the removable portions as extractable parts constitutes a preferential - but certainly not obligatory - choice for the purposes of implementing the invention. Alternatively, one or more of the wall portions 12a-15a may be formed integrally with the rear wall, but are able to be removed by means of breakage, by providing pre-weakened lines in the side walls 12-15 and along the rear wall 11. Extractable parts are, however, to be preferred because they may be reintroduced into their original position should it be required to close up again one of the perimetral walls, for example if one wishes to change the position of one box with respect to other boxes.

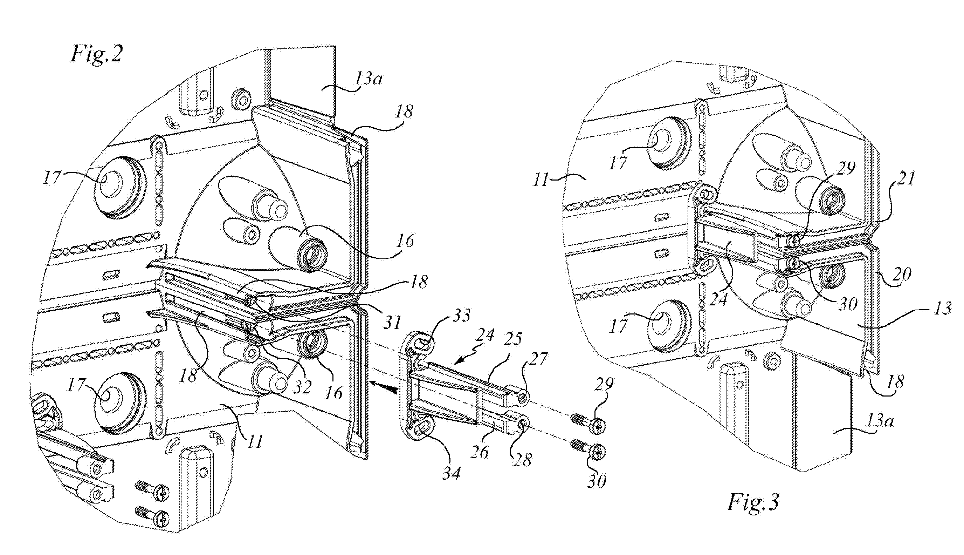

The reference number 24 designates coupling elements which may be associated with each box 10 in order to improve coupling together of the fixed parts of two facing perimetral walls forming part of two adjacent mounted enclosures. As illustrated in Figures 2 and 3, each coupling element 24 has two parallel straight ribs 25, 26 able to engage respectively inside the grooves 18 of two walls 12, 14 situated alongside each other. The coupling element 24 also has two front holes 27, 28 for fixing screws 29, 30 to be screwed into respective seats 31, 32 formed in the end front parts of the angular formations 20-23 or fixed portions of the side walls 12-15. In addition to or as an alternative to the front holes 27, 28, the coupling element 24 may have additional rear holes 33, 34 for fixing by means of screws (or other fixing elements) to the boxes 10.

It is understood that the invention is not limited to the embodiment which is described and illustrated here and which is to be regarded as an example of embodiment of the box; the invention may instead be subject to modifications relating to the shape and arrangement of parts, constructional details and materials used. For example, in a further embodiment not shown, only one or some of the perimetral walls may comprise a removable portion. Moreover, the removable wall portions may be combined with the remainder of the box in a manner different from that described and illustrated, for example using snap-engagement means. This also applies to the coupling elements - denoted by 24 - arranged astride two adjacent boxes.

## Claims

1. A box (10) for a switchboard enclosure, comprising a rear wall (11) which has, extending perpendicularly therefrom, perimetral walls (12-15), **characterized in that** at least one of the perimetral walls comprises a removable wall portion (12a-15a).

2. A box according to Claim 1, **characterized in that** each perimetral wall (12-15) comprises a respective removable wall portion (12a-15a).

3. A box according to Claim 2, **characterized in that** the perimetral walls of the box comprise fixed corner portions (20-23) which extend perpendicularly from vertices of the rear wall (11).

4. A box according to Claim 1, **characterized in that** the removable wall portion (12a-15a) is mounted slidably inside a pair of guides (18) perpendicular to the rear wall (11).

5. A box according to Claim 3, **characterized in that** each fixed corner portion (20-23) has two guides (18) perpendicular to the rear wall (11) and arranged on respective consecutive sides of the box for slidably mounting respective removable wall portions (12a-15a).

6. A box according to Claim 5, **characterized in that** it is associated with at least one coupling element (24) fixable along the guides (18) of two adjacent boxes (10).

7. A box according to Claim 6, **characterized in that** the coupling element (24) has two parallel straight ribs (25, 26) able to engage respective guides (18) of two adjacent boxes (10).

8. A box according to Claim 1, charaterized in that at least one of the perimetral walls comprises a wall portion (12a-15a) removable from the remainder of the box by means of breakage along pre-weakened lines.
